# EUROPEAN PATENT APPLICATION

(11) **EP 2 293 552 A2**
(43) Date of publication of application: **09.03.2011**
(21) Application number: 10161975.7
(22) Date of filing: 05.05.2010
(51) Int. Cl.: H04N 5/76, H04N 7/26

(54) **Broadcast recording apparatus and broadcast recording method**

(30) Priority: 29.07.2009 JP 2009176740
(71) Applicant: KABUSHIKI KAISHA TOSHIBA, Tokyo (JP)
(72) Inventor: Okada, Koji, Tokyo (JP)
(74) Representative: HOFFMANN EITLE

(57) **Abstract**

A broadcast recording apparatus includes: a storage medium configured to store a transport stream of broadcasting signal; and a re-multiplexer configured to: partialize a specific channel in the transport stream to output a partial transport stream; acquire time information in the transport stream; and insert action data into the partial transport stream based on the time information.

## Description

### CROSS REFERENCE TO RELATED APPLICATION(S)

The present disclosure relates to the subject matters contained in Japanese Patent Application No. 2009-176740 filed on July 29, 2009, which are incorporated herein by reference in its entirety.

### BACKGROUND

### 1. Field

The present invention relates to a broadcast recording apparatus and a method for partializing a transport stream (TS) recorded on a storage medium.

### 2. Description of the Related Art

Generally, one broadcast TS contains a plurality of channels. At video recording in the TS form, a process of extracting TS packets belonging to a specific channel, generating some sections corresponding to the TS packets and re-multiplexing section data is performed as a process called partializing. In re-multiplexing of section data, a maximum period (time) of insertion is determined according to the standard.

When a broadcast TS is received and recorded, TS inputting is substantially performed at a constant rate in real time. Accordingly, the method of re-multiplexing section data can be completed when a process of generating and inserting a section is repeated at regular intervals of a period not larger than the maximum period.

When a broadcast TS is recorded on a storage medium and then a specific channel is partialized, there is however a background art problem that a TS input rate which is a rate of the TS input to a partial TS generator is not equal to a real-time rate which is a rate of broadcasting. In the background art method, it is therefore necessary to change a section generating/inserting interval in accordance with the TS input rate (sections inserted at intervals of 2 sec in real time must be inserted at intervals of 1 sec if the TS input rate is doubled).

In a system in which a partializing rate is achieved in a best effort manner, the TS input rate however varies indefinitely. For this reason, there is a possibility that the TS input rate per se will be unable to be acquired or that the TS input rate will be too late far the rye-multiplexing process because the TS input rate affected by the reading rate and other processing rates exceeds the TS packet generating/inserting rate even when the TS input rate can be acquired. That is, in the section data re-multiplexing method according to the background art, the maximum period of insertion cannot be warranted.

A digital broadcast receiver relevantly described in JP-A-2008-17328 is configured so that an IP stream of all IP broadcast channels is directly extracted at intervals of a predetermined time and stored in an HDD, IP packets of a channel to be viewed are extracted from the HDD, a time stamp-including transport stream is separated from the IP packets, and fluctuation is corrected based on the time stamps to perform a synchronizing process. In the section inserting method according to the background art, there is however a problem that section data cannot be inserted at correct timing when the stream to be recorded is not fed at a uniform rate.

### SUMMARY

One of objects of the invention is to provide a technique for ensuring section insertion in re-multiplexing of section data of a broadcast channel.

According to an aspect of the invention, there is provided a broadcast recording apparatus including: a storage medium configured to store a transport stream of broadcasting signal; and a re-multiplexer configured to: partialize a specific channel in the transport stream to output a partial transport stream; acquire time information contained in the transport stream; and insert section data into the partial transport stream based on the time information.

Further, according to another aspect of the invention, there is provided a broadcast recording method including:
storing a transport stream of broadcasting in a storage medium;
partializing a specific channel in the transport stream to outputting a partial transport stream; acquiring time information in the transport stream at the output process; and
inserting section data into the partial transport stream based on the time information.

According to the invention, it is possible to provide a technique for ensuring section insertion in re-multiplexing of section data of a broadcast channel.

### BRIEF DESCRIPTION OF THE DRAWINGS

A general configuration that implements the various feature of the invention will be described with reference to the drawings. The drawings and the associated descriptions are provided to illustrate embodiments of the invention and not to limit the scope of the invention.
Fig. 1 is an exemplary diagram showing an environment in use of a digital television broadcast recording apparatus according to an embodiment of the invention;
Fig. 2 is an exemplary block diagram showing a main signal processing system in the digital television broadcast recording apparatus according to the embodiment;
Fig. 3 is an exemplary functional block diagram showing the embodiment; and
Fig. 4 is an exemplary functional block diagram showing another embodiment.

### DETAILED DESCRIPTION OF THE EMBODIMENTS

Embodiments of the invention will be described below.

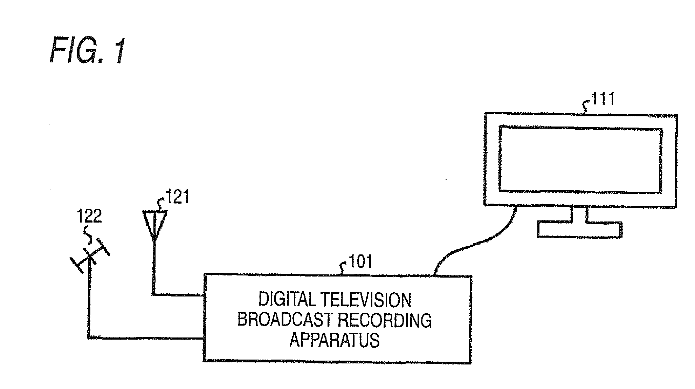

First embodiment of the invention will be described with reference to Figs. 1 to 3.

Digital television broadcasting has been standardized and description of details defined by the standard will be omitted in this specification.

Fig. 1 shows an environment in use of a digital television broadcast recording apparatus 101 according to the first embodiment of the invention.

As shown in Fig. 1, a BS/CS digital broadcast receiving antenna 121 and a digital terrestrial broadcast receiving antenna 122 are connected to the input side of the digital television broadcast recording apparatus 101 while a digital television broadcast receiver 111 is connected to the output side of the digital television broadcast recording apparatus 101. The digital television broadcast recording apparatus 101 can record programs as a full TS by demodulating a received digital television broadcast signal and decoding the demodulated signal. The digital television broadcast recording apparatus 101 further can feed video and audio signals of a program on the air or a recorded program to the digital television broadcast receiver 111 so that a user can view the program by the digital television broadcast receiver 111 which is a portion for displaying these signals.

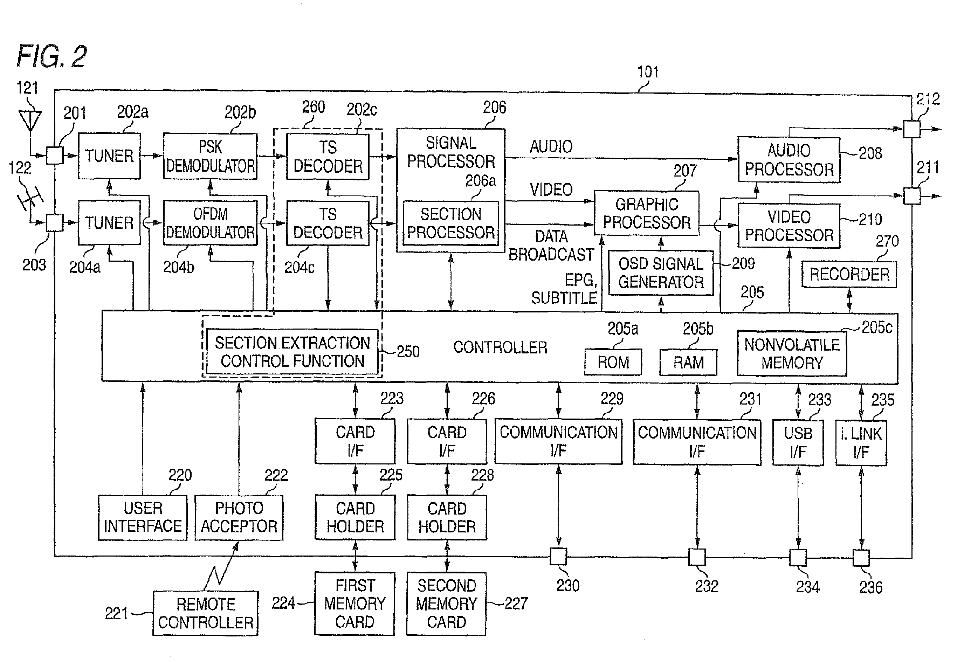

Although only two systems for BS/CS digital broadcast receiving and digital terrestrial broadcast receiving are shown for the sake of simplification in the digital television broadcast recording apparatus 101 shown in Fig. 1 (and Fig. 2 which will be described later), the digital television broadcast recording apparatus 101 according to the first embodiment can record multi-channel programs and may be therefore configured to have a plurality of receiving circuits such as tuners, as well as the BS/CS digital broadcast receiving circuit and the digital terrestrial broadcast receiving circuit.

A hardware configuration of the digital television broadcast recording apparatus 101 will be described next.

Fig. 2 is a block diagram showing a main signal processing system in the digital television broadcast recording apparatus 101.

A satellite digital television broadcast signal received through the BS/CS digital broadcast receiving antenna 121 is fed to a satellite digital broadcast tuner 202a through an input terminal 201.

The tuner 202a selects a broadcast signal of a desired channel based on a control signal given from a controller 205 and outputs the selected broadcast signal to a phase shift keying (PSK) demodulator 202b.

The PSK demodulator 202b demodulates the broadcast signal selected by the tuner 202a based on a control signal given from the controller 205 to obtain a transport stream (TS) containing a desired program and outputs the TS to a TS decoder 202a.

The TS decoder 202c performs a TS decoding process on a transport stream (TS)-multiplexed signal based on the control signal from the controller 205 and the input signal from the PSK demodulator 202b, obtains a packetized elementary stream (PES) by depacketizing digital video and audio signals of the desired program and outputs the PES to an STD buffer (not shown) in a signal processor 206.

The TS decoder 202c further outputs section information fed from the digital broadcast to a section processor (not shown) in the signal processor 206.

A digital terrestrial television broadcast signal received through the digital terrestrial broadcast receiving antenna 122 is fed to a digital terrestrial broadcast tuner 204a through an input terminal 203.

The tuner 204a selects a broadcast signal of a desired channel based on a control signal given from the controller 205 and outputs the selected broadcast signal to an orthogonal frequency division multiplexing (OFDM) demodulator 204b.

The OFDM demodulator 204b demodulates the broadcast signal selected by the tuner 204a based on a control signal given from the controller 205 to obtain a transport stream (TS) containing a desired program and outputs the TS to a TS decoder 204c.

The TS decoder 204c performs a TS decoding process on a transport stream (TS)-multiplexed signal based on the control signal from the controller 205 and the input signal from the OFDM demodulator 204b, obtains a packetized elementary stream (PES) by depacketizing digital video and audio signals of the desired program and outputs the PES to the STD buffer in the signal processor 206.

The TS decoder 204c further outputs section information fed from the digital broadcast to the section processor 206a in the signal processor 206.

On this occasion, at television viewing, the signal processor 206 selectively applies predetermined digital signal processing to the PESs which are digital video and audio signals fed from the TS decoder 202c and the TS decoder 204c respectively, and outputs the processed signals to a graphic processor 207 and an audio processor 208 respectively. On the other hand, at program recording, the signals obtained by selectively applying predetermined digital signal processing to the PESs which are digital video and audio signals fed from the TS decoder 202c and the TS decoder 204c respectively, are recorded on a recorder (e.g. HDD) 270 through the controller 205. At recorded program reproducing, the signal processor 206 applies predetermined digital signal processing to data of a recorded program read from the recorder (e.g. HDD) 270 through the controller 205 and outputs the processed signals to the graphic processor 207 and the audio processor 208 respectively.

Various data (B-CAS scrambling key information, etc.) for acquiring programs, electronic program guide (EPG) information, program attribute information (program genre, etc.) subtitle information (service information, SI and PSI), etc. are input to the controller 205 through the signal processor 206.

The controller 205 performs an image generating process for displaying EPG and subtitle information from these pieces of input information and outputs the generated image information to the graphic processor 207.

The controller 205 further has a function of controlling program recording and program scheduled recording. When program scheduled recording is accepted, the controller 205 displays electronic program guide (EPG) information on an external display device (such as a digital television set) and sets the content of scheduling in a predetermined storage unit in accordance with user's inputting through an user interface 220 or a remote controller 221. Then, the controller 205 controls the tuners 202a and 204a, the PSK and OFDM demodulators 202b and 204b, the TS decoders 202c and 204c and the signal processor 206 so that the scheduled program can be recorded at the set time. On the other hand, when programs of all channels allowed to be recorded are to be recorded automatically as an all-channel recording function, the controller 205 controls respective devices to perform recording regardless of time.

The section processor 206a in the signal processor 206 extracts various data for acquiring programs, electronic program guide (EPG) information, program attribute information (program genre, etc.) subtitle information (service information, SI and PSI), etc. from section information input from the TS decoder 202c (204c) and outputs the extracted information to the controller 205.

The graphic processor 207 has a function of combining a digital video signal fed from an AV decoder (not shown) in the signal processor 206, an OSD signal generated by an on screen display (OSD) signal generator 209, image data based on data broadcasting and EPG and subtitle signals generated by the controller 205, and outputting the resulting composite signal to a video processor 210.

When a subtitle based on subtitle broadcasting is to be displayed, the graphic processor 207 performs a process of superposing subtitle information on the video signal based on the subtitle information controlled by the controller 205.

The digital video signal output from the graphic processor 207 is fed to the video processor 210. The video processor 210 converts the input digital video signal into an analog video signal of a format allowed to be displayed on the digital television broadcast receiver 111 and outputs the analog video signal to the digital television broadcast receiver 111 through an output terminal 211 so that video is displayed.

On the other hand, the audio processor 208 converts the input digital audio signal into an analog audio signal of a format allowed to be reproduced by the digital television broadcast receiver 111 and outputs the analog audio signal to the digital television broadcast receiver 111 through an output terminal 212 so that audio is reproduced.

On this occasion, the digital television broadcast recording apparatus 101 is configured so that all operations inclusive of the aforementioned various receiving operations are generally controlled by the controller 205. The controller 205 has a built-in central processing unit (CPU), etc. The controller 205 receives operation information from the user interface 220 or receives operation information sent out from the remote controller 221 through a photo acceptor 222, and controls respective portions so that the content of the operation is reflected.

In this case, the controller 205 mainly uses a read only memory ROM) 205a, an random access memory (RAM) 205b and a nonvolatile memory 205c. Control programs executed by the CPU are stored in the ROM 205a. The RAM 205b provides a working area to the CPU. Various types of setting information, control information, etc. are stored in the nonvolatile memory 205c.

The controller 205 is connected to a card holder 225 in which a first memory card 224 can be mounted, through a card interface (I/F) 223. Accordingly, the controller 205 can exchange information with the first memory card 224 mounted in the card holder 225, through the card I/F 223.

The controller 205 is further connected to a card holder 228 in which a second memory card 227 can be mounted, through a card I/F 226. Accordingly, the controller 205 can exchange information with the second memory card 27 mounted in the card holder 228, through the card I/F 226.

The controller 205 is further connected to a first LAN terminal 230 through a communication I/F 229. Accordingly, the controller 205 can exchange information with an LAN-support device (e.g. external HDD) connected to the first LAN terminal 230, through the communication T/F 229. In this case, the controller 205 has a dynamic host configuration protocol (DHCP) server function which allocates an internet protocol (IP) address to the LAN-support device connected to the first LAN terminal 230 in order to control the LAN-support device.

The controller 205 is further connected to a second LAN terminal 232 through a communication I/F 231. Accordingly, the controller 205 can exchange information with any type LAN-support device connected to the second LAN terminal 232, through the communication I/F 231.

The controller 205 is further connected to a USB terminal 234 through a USB I/F 233. Accordingly, the controller 205 can exchange information with any type device connected to the USB terminal 234, through the USB I/F 233.

The controller 205 is further connected to an i.LINK terminal 236 through an i.LINK I/F 235. Accordingly, the controller 205 can exchange information with any type device connected to the i.LINK terminal 236, through the i.LINK I/F 235.

The controller 205 further has a section extraction control function 250 as a function portion related to the invention. The controller 205 performs the following section extraction control by using the section extraction control function 250.

In a block 260 shown in Fig. 2, section data decoded by the TS decoder 202c (204c) are separated and extracted in accordance with each section. The data sequence extracted in accordance with each section is reconstructed (section generation) and the reconstructed data sequence is fed to the signal processor 206 in accordance with each channel.

In the section extraction in this embodiment, the section extraction control function 250 of the controller 205 performs respective section extraction processing control for a process of recording a data stream of each program to be recorded (recording process).

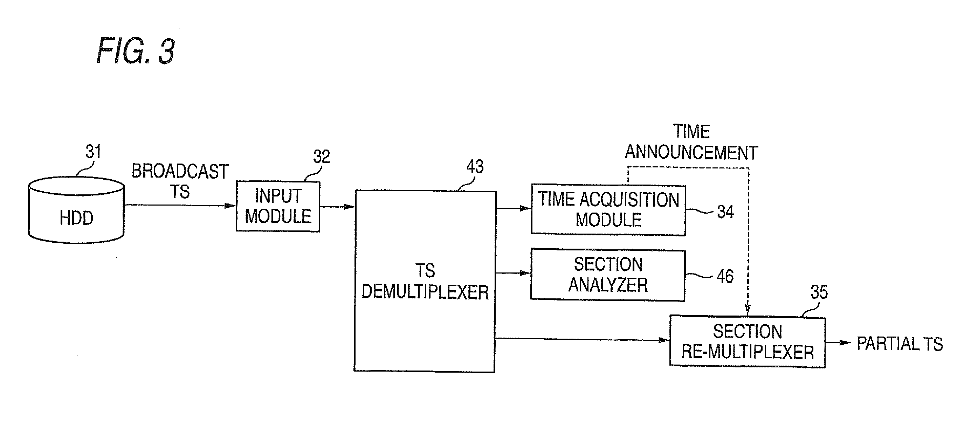

Fig. 3 is a functional block diagram focusing on the controller 205 of Fig. 2 showing an embodiment of the invention.

In Fig. 3, a broadcast TS which is a full TS is directly recorded on an HDD 31 corresponding to the recorder 270 shown in Fig. 2. An input module 32 in the controller 205 reads the broadcast TS from the HDD 31 at a higher speed than the speed of broadcasting. A TS demultiplexer 43 demultiplexes the TS into a section, a program clock reference (PCR), an audio elementary stream (ES) and a video elementary stream (ES) and feeds these demultiplexed pieces of data to respective processors in a rear stage. For example, the PCR is fed to a time acquisition module 34.

The time acquisition module 34 acquires time information in the stream from the PCR and sends the time information to a section re-multiplexer 35 when a predetermined time interval has passed.

Upon reception of the time information from the time acquisition module 34, the section re-multiplexer 35 performs section generation and insertion on the partial TS stream fed from the TS demultiplexer 43.

A section analyzer 46 analyzes various types of sections necessary for partializing.

In Japan, the maximum period of section insertion into the partial TS is defined by ARIB. For example, the maximum period of section insertion into the partial TS in digital terrestrial broadcasting is defined as PAT=120msec, PMT=120msec and SIT=3.6sec according to ARIBTR-B14, second edition, chapter 8.

Even when the TS input rate varies widely in such a device that records a broadcast TS on a storage medium and then partializes a specific channel, section data can be re-multiplexed at intervals of a designated constant time. Accordingly, the maximum period of insertion can be prevented from exceeding a standard value at the time of re-multiplexing of section data.

Second embodiment of the invention will be described with reference to Figs. 1 and 2 and Fig. 4. Description of parts common to those of the first embodiment will be omitted.

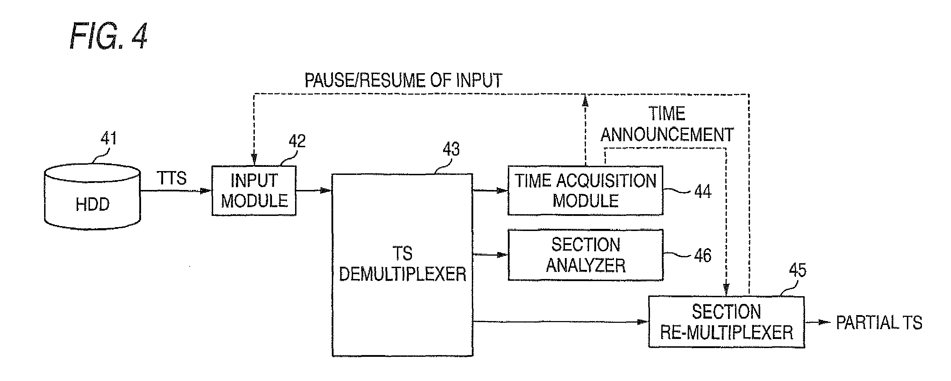

Fig. 4 is a block diagram showing the second embodiment of the invention.

In Fig. 4, a broadcast TS is converted into a time stamp-including TTS in advance by the controller 205, so that the TTS is recorded on an HDD 41. An input module 42 reads the TTS from the HDD 41. The TS demultiplexer 43 demultiplexes the TTS into a section, a PCR, an audio ES and a video ES and feeds these demultiplexed pieces of data to respective processors in a rear stage.

A time acquisition module 44 acquires time information in the stream from the TTS. When a predetermined time interval has passed, the time acquisition module 44 sends the time information to a section re-multiplexer 45 and instructs the input module 42 to pause.

Upon reception of the time information from the time acquisition module 44, the section re-multiplexer 45 performs section generation and insertion on the partial TS stream fed from the TS demultiplexer 43 and then instructs the input module 42 to resume the inputting.

The section analyzer 46 analyzes various types of sections necessary for partializing.

In first embodiment, there is a possibility that processing in the section re-multiplexer 35 will overflow or underflow. When the disadvantage caused by occurrence of overflow or underflow is large, an image may fail. In the second embodiment, failure of the image is prevented by the aforementioned control to synchronize the input module 42 with processing in the section re-multiplexer 45.

The point of the aforementioned embodiments is as follows. In such a device that records a broadcast TS on a storage medium and then partializes a specific channel, time information in a stream is acquired and sent at intervals of a designated time and, at the same time, inputting of the stream input module is stopped unless insertion is completed. Upon reception of the time information, the section re-multiplexer 45 performs section generation and insertion. When insertion is completed, the section re-multiplexer 45 instructs the stream input module to resume the inputting.

Advantages obtained by the configuration described above are as follows. Even when the TS input rate varies widely, section data can be re-multiplexed at intervals of a designated constant time. Accordingly, the maximum period of insertion can be prevented from exceeding a standard value at the time of re-multiplexing of section data.

The invention is not limited to the aforementioned embodiments and can be modified variously without departing from the gist of the invention. For example, the storage medium may be not only an HDD but also an SD memory card.

Constituent components disclosed in the aforementioned embodiments may be combined suitably to form various inventions. For example, some constituent components may be removed from all constituent components disclosed in any one of the embodiments. In addition, constituent components disclosed in different embodiments may be combined suitably.

## Claims

1. A broadcast recording apparatus comprising:
a storage medium configured to store a transport stream of broadcasting signal; and
a re-multiplexer configured to:
partialize a specific channel in the transport stream to output a partial transport stream;
acquire time information contained in the transport stream; and
insert section data into the partial transport stream based on the time information.

2. The apparatus of Claim 1, further comprising an input module configured to read the transport stream from the storage medium, wherein
the re-multiplexer is configured to:
output a first signal instructing the input module to pause reading the transport stream when the rye-multiplexer starts insertion of the section data; and
output a second signal instructing the input module to resume reading the transport stream when the re-multiplexer ends the insertion.

3. The apparatus of Claim 1, wherein
the time information is Program Clock Reference.

4. The apparatus of Claim 1, wherein
the time information is a time stamp which is added when the transport stream is stored in the storage medium.

5. The apparatus of Claim 1, further comprising
a display configured to display the partial transport stream output from the re-multiplexer.

6. A broadcast recording method comprising:
storing a transport stream of broadcasting signal in a storage medium;
partializing a specific channel in the transport stream to outputting a partial transport stream;
acquiring time information in the transport stream at the output process; and
inserting section data into the partial transport stream based on the time information.
